Europäisches Patentamt

European Patent Office

Office européen des brevets

(19)

(11) Publication number : **0 462 804 A2**

# EUROPEAN PATENT APPLICATION

(12)

(21) Application number : **91305509.1**

(22) Date of filing : **18.06.91**

(51) Int. Cl.⁵ : **H04N 5/18**

(30) Priority : **18.06.90 JP 159249/90**

(43) Date of publication of application :
**27.12.91 Bulletin 91/52**

(84) Designated Contracting States :
**DE FR GB**

(71) Applicant : **VICTOR COMPANY OF JAPAN, LTD.**
**12, Moriya-Cho 3-Chome, Kanagawa-Ku**
**Yokohama-Shi, Kanagawa-Ken (JP)**

(72) Inventor : **Ozaki, Hidetoshi**
**404, Shirosato Kooto, 672-4, Toriyama-Cho**
**Kouhoku-Ku, Yokohama-Shi, Kanagawa-Ken**
**(JP)**
Inventor : **Goukura, Akira**
**3-401, Mitsubishi Yuka Shataku, 645,**
**Kawakami-Cho**
**Totsuka-Ku, Yokohama-Shi, Kanagawa-Ken**
**(JP)**

(74) Representative : **Dawson, Elizabeth Ann**
**A.A. THORNTON & CO. Northumberland**
**House 303-306 High Holborn**
**London WC1V 7LE (GB)**

(54) **Video signal clamper.**

(57)  A video signal clamper includes a DC level shifting circuit for controlling a DC component of an input analog video signal in response to a bias voltage and an A-D converter for converting the input analog video signal from the DC level shifting circuit into a digital video signal. A D-A converter (10) is provided for generating the bias voltage. A difference value corresponding to the difference between the value of the digital video signal and a value corresponding to a clamp level of the input analog video signal is applied through a full integral type digital filter (9) to the D-A converter (10). This full integral type digital filter (9) supplies to the D-A converter (10) the sum of the last difference value and the present difference value so as to renew the former. Therefore, the clamp level is precisely maintained.

EP 0 462 804 A2

F I G . 3

## BACKGROUND OF THE INVENTION

(Field of the Invention)

This invention relates to a circuit for converting an input analog video signal into a digital video signal, and more particularly, to a video signal clamper capable of precisely maintaining a clamp level after an A-D conversion of the input analog video signal.

(Description of the Prior Art)

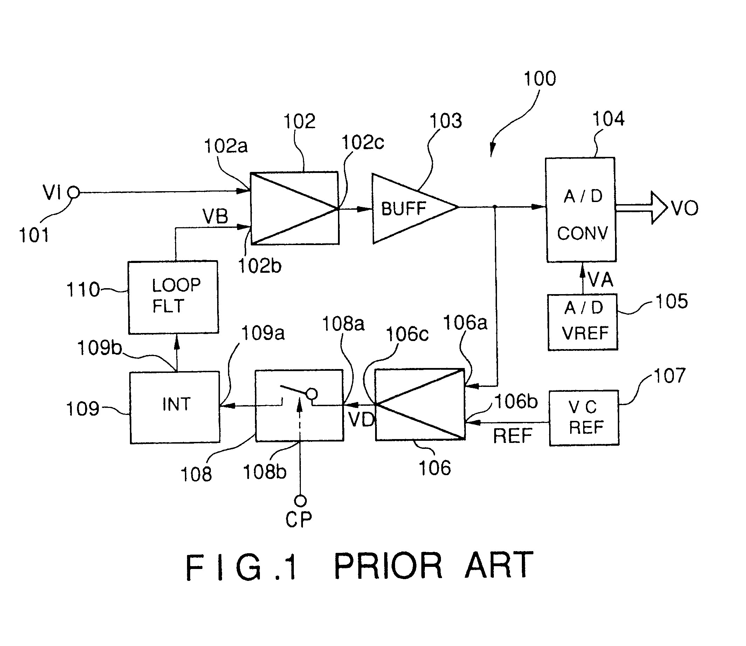

Fig. 1 is a block diagram of a conventional video signal clamper.

This video signal clamper 100 is of the analog voltage feedback type. An analog video signal VI received at an input input terminal 101 is applied to the signal input terminal 102a of a mixing amplifier 102 identical in function to a DC level shifting circuit. This mixing amplifier 102 provides at its output terminal 102c an output signal which includes a DC component determined in response to a bias voltage VB received at its DC output voltage adjust terminal 102b. This output signal is applied through a buffer 103 to an A-D converter 104 which provides a digital video signal VO. This A-D converter 104 receives an A-D conversion reference voltage VA from an A-D conversion reference voltage generating circuit 105.

The output signal of the buffer 103 is applied to the one input terminal 106a of a differential amplifier 106. The other input terminal 106b of the differential amplifier 106 receives a reference voltage REF corresponding to a clamp level of the analog video signal VI from a clamp level reference voltage generating circuit 107. The differential amplifier 106 provides at its output terminal 106c an output voltage VD which is the sum of or difference between the reference voltage REF and the analog video signal outputted from the buffer 103. This output voltage VD is applied to the input terminal 108a of a switching circuit 108. Since this switching circuit 108 turns on in response to a clamp pulse CP received at its on/off control terminal 108b which is representative of the timing at which the analog video signal VI is to be clamped at its pedestal level for example, the output voltage VD is applied to an integrator 109 only while the switching circuit 108 in the on state.

This integrator 109 is designed to integrate a voltage received at its input terminal 109a at every horizontal scanning interval on the basis of a given time constant of integration and hold the thus integrated voltage during at least one horizontal scanning period. The output signal 109b of the integrator 109 is applied through a loop filter 110 including low-pass filters and the like to the DC output voltage adjust terminal 102b of the mixing amplifier 102.

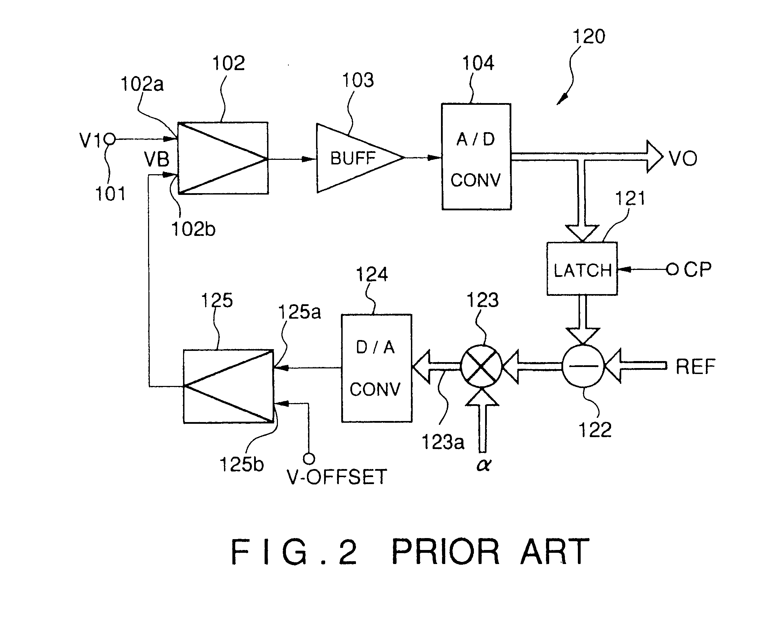

Fig. 2 is a block diagram of another conventional video signal clamper.

In this video signal clamper 120, the digital video output signal VO after the A-D conversion is latched in a latch circuit 121 in response to the clamp pulse CP. The output signal of the latch circuit 121 is applied to the one input terminal of a digital subtracter 122. The other input terminal of the circuit 122 receives a reference value REF corresponding to the clamp level of the analog video signal. The difference between the two input values is multiplied in a digital multiplier 123 using a multiplication coefficient $\alpha$, the resulting value 123a being applied to a D-A converter 124.

The output signal or analog voltage of the D-A converter 124 is applied to the one input terminal 125a of an operational amplifier 125. The other input terminal 125b of the operational amplifier 125 receives an offset voltage V-OFFSET. The operational amplifier 125 is designed to provide an output voltage resulted from a superposition of the offset voltage V-OFFSET on the analog voltage of the D-A converter 124 applied to the input terminal 125a. This output voltage is applied, as the bias voltage VB, to the DC output voltage adjust terminal 102b of the mixing amplifier 102 to which the analog video signal VI is also applied.

In the video signal clamper 100 of the analog voltage feedback type shown in Fig. 1, even when the output voltage VA of the A-D conversion reference voltage generating circuit 105 and the reference voltage REF of the clamp level reference voltage generating circuit 107 are correctly adjusted, the output digital video signal VO after the A-D conversion cannot always be steady due to variation in characteristic of the A-D converter 104 and the like. Further, since the feedback loop is made of the analog circuitry, errors tend to occur due to temperature change or aging. Therefore, this type is insufficient from the view point of preciseness for the purpose of maintaining the clamp level value of the digital video output signal within a desired range.

On the other hand, in the video signal clamper 120 shown in Fig. 2 wherein the feedback control is performed on the basis of the value after the A-D conversion, since the difference between the value (referred to as an AD value) of a portion to be clamped which is latched in the latch circuit 121 and a clamp reference value (referred to as REF value) is converted from a digital to an analog form and then applied to a subsequent analog circuit, the value of the digital video output signal VO after the A-D conversion is subject to a fluctuation of the bias voltage VB applied to the DC output voltage adjust terminal 102b of the mixing amplifier 102 of the first stage.

As will be appreciated, when the difference between the AD value and the REF value is zero, a value (referred to as DA value) being applied to the D-A converter 124 becomes zero; in other words, when the DA value is zero, the difference between the AD value and the REF value must be zero. Therefore, under the DA value of zero the analog circuits included in a path from the output of the D-A converter 124 to the input of the A-D converter 104 must maintain their offset potentials so as to present the bias voltage VB of proper potential. In this regard, such offset potentials may be compensated by adjusting the offset voltage V-OFFSET of the operational amplifier 125, however, where the offset potentials are generated from the analog circuits, it is difficult to properly adjust the potentials, and the fluctuation of the offset potentials due to temperature change or being aged, poses a critical problem. That is, it is desirable to perform a control with the theoretical minimum unit which is no more than one bit after the A-D conversion, but in reality, the minimum control unit exceeds one bit, making it difficult to ensure a necessary precision of the clamp level control.

## SUMMARY OF THE INVENTION

It is an object of the present invention to provide an adjustment-free video signal clamper which can provide a high precision for a clamp level of a digital video signal after its A-D conversion and suppresses the fluctuation of the clamp level that would otherwise be caused by temperature change or aging.

To accomplish the foregoing object, the present invention provides a video signal clamper which includes at least a DC level shifting circuit for controlling a level of DC component of an input analog video signal in response to a bias voltage supplied to the DC shifting circuit, and an A-D converter for converting the input analog video signal which is controlled in DC level by and outputted from the DC level shifting circuit, into a digital video signal, and comprises a comparator for producing, at every horizontal scanning period of the analog video signal, digital difference value by comparing the digital video signal converted from a portion to be clamped of the analog video signal outputted from the DC level shifting circuit with a reference value, an integrator, receiving sequentially a series of the difference values produced by the comparator, for summing the series of the digital difference values received up to present to output the resultant sum and a converter for converting said resultant sum into an analog signal, which is supplied to the DC level shifting circuit as said bias voltage.

Since the difference value corresponding to the difference between the clamp level value of the digital video signal after the A-D conversion and the value corresponding to the clamp level of the input analog video signal, is applied through the full integral type digital filter to the D-A converter, the output value of the full integral type digital filter increases and decreases until the clamp level value of the digital video signal becomes equal to the value corresponding to the clamp level, of the input analog video signal, and correspondingly, the output voltage of the D-A converter changes, accordingly the DC component of the analog video signal is adjusted. When the A-D converted clamp level value becomes equal to the value corresponding to the clamp level, of the input analog video signal, the difference value becomes zero, and thus, the last value is applied to the D-A converter each time, whereby the optimal DC component clamping state is preserved.

With the D-A converter designed to have a high converting ratio between its digital input to its analog output, the control of the bias voltage after the D-A conversion is performed at fine steps, whereby the DC component can be controlled in a short response time with high precision.

## BRIEF DESCRIPTION OF THE DRAWINGS

Fig. 1 is a block diagram of a conventional video signal clamper of the analog voltage feedback type;
Fig. 2 is a block diagram of another conventional video signal clamper;
Fig. 3 is a block diagram of a first embodiment of a video signal clamper according to the present invention;
Fig. 4 is a block diagram of a second embodiment of the video signal clamper according to the present invention;
Fig. 5 is a block diagram of a third embodiment of the video signal clamper according to the present invention; and
Fig. 6 is a graph showing the relationship between the input value and the output value of a data converting circuit included in the video signal clamper shown in Fig. 3.

## DESCRIPTION OF THE PREFERRED EMBODIMENTS

Embodiments of the present invention will now be described with reference to the accompanying drawings.

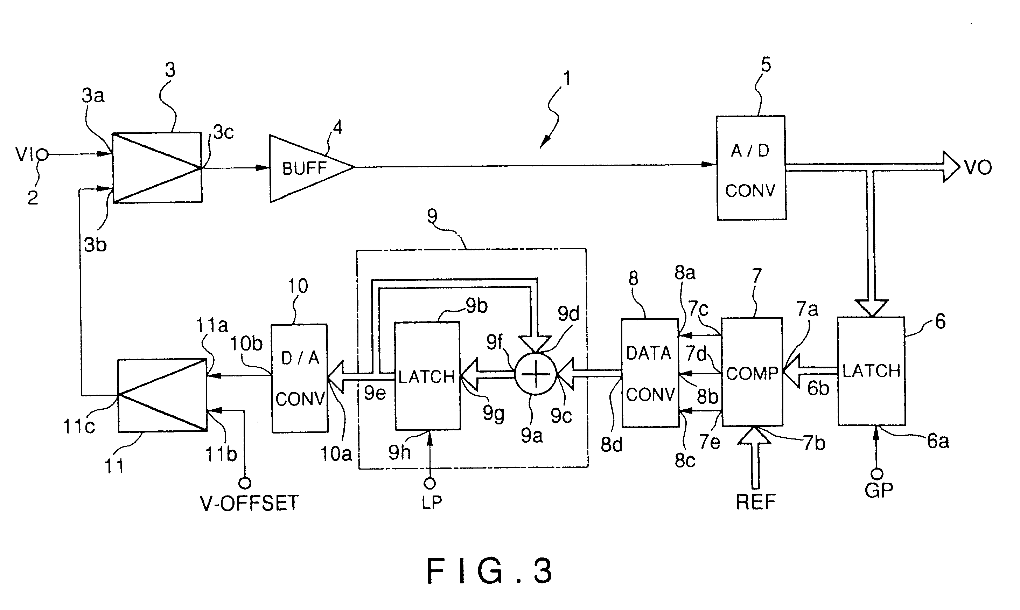

Fig. 3 is a block diagram of a first embodiment of a video signal clamper according to the present invention.

This video signal clamper 1 includes a mixing amplifier 3 identical in function to a DC level shifting circuit, which provides at its output terminal 3c an output signal corresponding in amplified form to an analog video signal VI applied through an input terminal 2 to its one input terminal 3a, and the output signal includes a DC component determined in accordance with a bias voltage VB applied to its other input terminal 3b. The output signal of the mixing amplifier 3 is applied through a buffer 4 to an A-D converter 5, which becomes a digital video signal VO. This digital video signal VO after the A-D conversion is fed also through a feedback path made up of a latch circuit 6, a comparator 7, a data converting circuit 8, a full integral type digital filter 9, a D-A converter 10, and an operational amplifier 11. The feedback path controls the bias voltage VB to adjust a clamp level i.e. the DC component of the analog video signal VI.

A gate pulse GP derived from a horizontal synchronizing signal and the like of the analog video signal, is applied to the latch control input terminal 6a of the latch circuit 6 so that the value of a pedestal portion or a synch tip of the digital video signal VO is latched. The output signal 6b of the latch circuit 6 is applied to the one input terminal 7a of the comparator 7.

The other input terminal 7b of this comparator 7 receives a reference value REF corresponding to a clamp level of the analog video signal VI. The comparator 7 is of the so-called magnitude comparison type, which compares the two input values at its input terminals 7a and 7b, and produces at its output terminal 7c an H-level signal when the value at the input terminal 7a is larger than the value at the input terminal 7b (i.e. when the value of the pedestal portion of the digital video signal VO is larger than the reference value REF corresponding to the clamp level), at its output terminal 7d the H-level signal in the reversed condition, i.e. the value at 7a is lower than the value at 7b, and at its output terminal 7e the H-level signal when the two input values are identical each other. These signals are applied individually to the input terminals 8a to 8b of the data converting circuit 8.

The data converting circuit 8 is designed so that a value (expressed by a plurality of bits) corresponding to binary "-1" is outputted from its output terminal 8d when the H-level signal is applied to the input terminal 8a (i.e. when the value of the pedestal portion after the A-D conversion is larger than the reference value REF corresponding to the clamp level), a value corresponding to binary "+1" is outputted when the H-level signal is applied to the input terminal 8b, and a value corresponding to binary "0" is outputted when the H-level signal is applied to the input terminal 8c. The foregoing value (referred to as difference value) corresponding to the comparison result is applied to the full integral type digital filter 9 capable of processing a signed values. The data converting circuit 8 may be modified as to output "-n", "+n" and "0" (n is an integer) as the value (difference value) corresponding to the comparison result.

The full integral type digital filter 9 is composed of a latch circuit 9b and an adder 9a capable of performing addition/subtraction on binary values expressed by a plurality of bits. The one input terminal 9c of the adder 9a receives the difference value of the data converting circuit 8, the other input terminal 9d receives the output value 9e of the latch circuit 9b through another feedback path, and the output terminal 9f of the adder 9a is connected to the input terminal 9g of the latch circuit 9b. The latch control terminal 9h of the latch circuit 9b receives a latch pulse LP. This latch pulse LP is supplied at a predetermined time later than the gate pulse GP. This predetermined time is determined so as to cover at least the delay time from the moment of the output signal change of the latch circuit 6 to the moment that all of the outputs of the comparator 7, data converting circuit 8, and adder 9a are responded accordingly and finally stabilized.

The output value 9e of the full integral type digital filter 9 is applied to the input terminal 10a of the D-A converter 10. Specifically, the full integral type digital filter 9 is designed to add the present value supplied from the data converting circuit 8 to the previously outputted last value applied to the D-A converter 10 at every horizontal scanning frequency of the video signal. Therefore, when the value of the pedestal portion of the digital video signal VO is larger than the reference value REF corresponding to the clamp level, the output value 9e of the full integral type digital filter 9 is renewed to decrease every horizontal scanning; conversely, when the value of the pedestal portion is smaller than the reference value REF, the output value 9e increases; and when the value of the pedestal portion is equal to the reference value REF, the output value 9e is unchanged (kept equal to the last value).

An analog voltage produced at the output terminal 10b of the D-A converter 10 is applied to the one input terminal 11a of the operational amplifier 11. The other input terminal 11b of the operational amplifier 11 receives an offset voltage V-OFFSET. The operational amplifier 11 is designed to produce at its output terminal 11c as such that an output voltage determined in accordance with the offset voltage V-OFFSET is superposed on a voltage determined in accordance with the voltage applied to the one input terminal 11a, this output voltage serves as the bias voltage VB.

The bias voltage VB is applied to the other input terminal (DC output voltage adjust terminal) 3b of the mixing amplifier 3 so that the clamp level of the analog video signal VI is controlled.

According to the foregoing configuration, when the value of the pedestal portion latched in the latch circuit 6 is different from the reference value REF corresponding to the clamp level, the data converting circuit 8 produces the output value representative of "+1" or "-1" depending on the status of the difference, and the value applied from the full integral type digital filter 9 to the D-A converter 10 is renewed at every horizontal scanning period, whereby control is performed such that the difference between the value of the pedestal portion and the reference value REF corresponding to the clamp level decreases progressively. When the difference disappears, the output value of the data converting circuit 8 becomes zero; as a result, the output value of the full integral type digital filter 9 composed of the adder 9a and the latch circuit 9b is not renewed after the last horizontal scanning, thus maintains its last value.

Since the bias voltage VB in the controlled and stabilized condition represents the potential at which the output value of the latch circuit 6 becomes equal to the reference value REF corresponding to the clamp level, even if the characteristic of the analog circuits varies due to temperature change or being aged, the value of the pedestal portion of the digital video signal VO produced from the A-D converter 5 is unchanged.

It is generally desirable that the offset voltage V-OFFSET applied to the operational amplifier 11 be determined such that under the condition that the control through the feedback path is steady, the output level of the D-A converter 10 is set to at substantially the center of the variable range (dynamic range) of output voltage of the D-A converter 10 in order to utilize the dynamic range of the D-A converter adequately. However, in this first embodiment, as far as the feedback path is well designed to follow the dynamic range of the input analog video signal VI, setting of the offset voltage V-OFFSET can no longer be critical, making the video signal clamper 1 adjustment free.

The full integral type digital filter 9 may be modified such that the sum output value of the adder 9a is applied directly to the D-A converter 10 and also to the latch circuit 9b, and the output 9e of the latch circuit 9b is connected to the other input terminal 9d of the adder 9a.

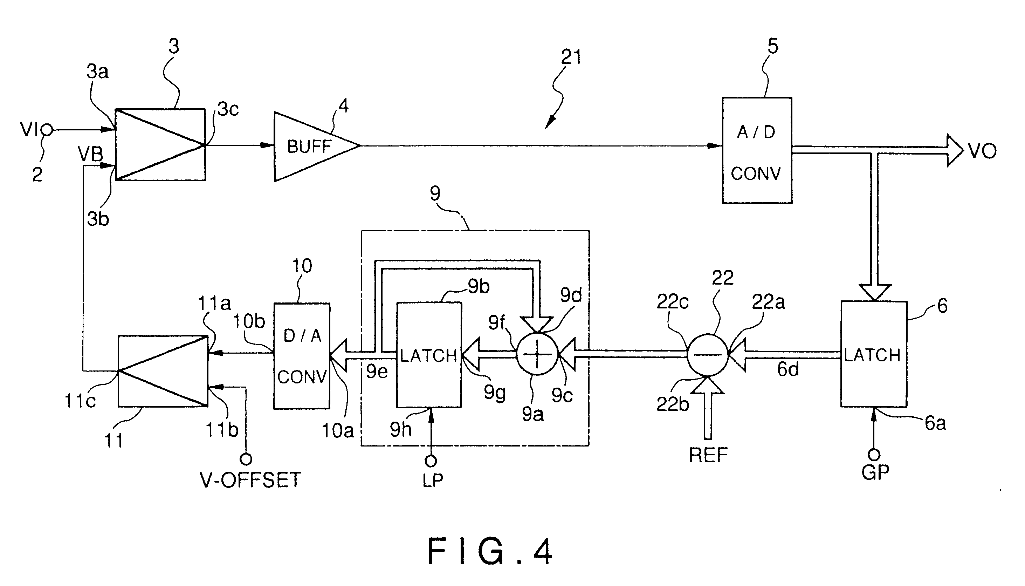

Fig. 4 is a block diagram of a second embodiment of the video signal clamper according to the present invention.

This video signal clamper 21 is identical in fundamental configuration with that shown in Fig. 1; therefore, identical components are designated by the same reference symbols, and the differences between them will be described.

The output value 6b of the latch circuit 6 is applied to the one input terminal 22a of a subtracter 22, and the other input terminal 22b receives the reference value REF corresponding to the clamp level. This subtracter 22 is designed to produce at its output terminal 22c the difference between the output value 6b of the latch circuit 6 and the reference value REF, with the minus sign when the output value 6b is larger than the reference value REF, or with the plus sign in the reversed condition, or the value of zero when the two input values are identical each other.

According to the foregoing configuration, when the difference between the reference value REF corresponding to the clamp level and the value corresponding to the pedestal portion of the digital video signal VO is large, the difference value being applied to the full integral type digital filter 9 becomes large; therefore, the clamp level control can be attained with superior transient response.

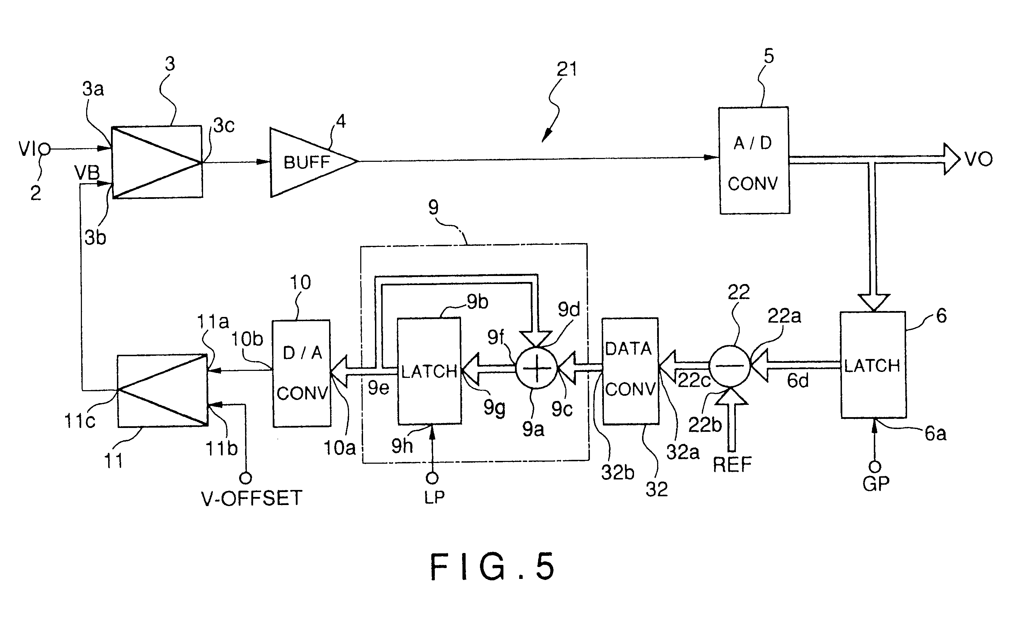

Fig. 5 is a block diagram of a third embodiment of the video signal clamper according to the present invention.

In this video signal clamper 31, the digital output value 22c of the subtracter 22 is applied through a data converting circuit 32 to the full integral type digital filter 9. This data converting circuit 32 is designed so that the relationship between the input value received at its input terminal 32a and the output value produced at its output terminal 32b is nonlinear.

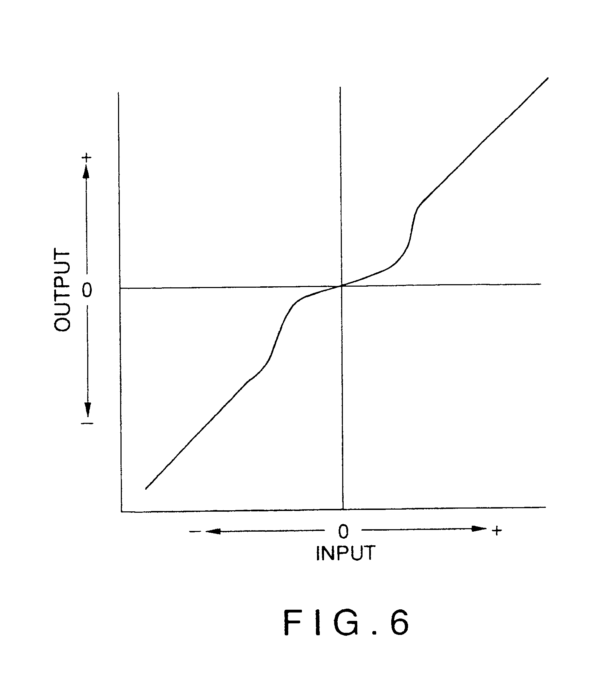

Fig. 6 is a graph showing the relationship between the input and output values of the data converting circuit 32.

When the absolute value of the digital output value 22c (the difference value) is large, a larger output value is generated from the data converting circuit 32 and applied to the full integral type digital filter 9, so that the transient response is further enhanced. On the other hand, when the absolute value of the value 22c (the difference value) is small, i.e. when the clamp level value of the digital video signal VO is close to the reference value REF, the variation of the input value to the full integral type digital filter 9 is small, so that the stability of the feedback control is enhanced.

The data converting circuit 32 having such an input-output characteristic as above may be utilized by a so-called ROM table which is formed by preliminary storing conversion data in a ROM (read-only memory) or the like, or may be made of an arithmetic circuit whose multiplication coefficient varies dependent on the input value.

As described above, in the video signal clamper according to the present invention, the value corresponding to the difference between the value of the pedestal portion after the A-D conversion and the reference value corresponding to the clamp level is applied through the full integral type digital filter to the D-A converter, and the feedback control is performed such that the DC component of the analog video signal is controlled in accordance with the output signal of the D-A converter; therefore, even when there exist variations in characteristics of the analog circuits and even when the characteristics change due to temperature change or being aged, the clamp level of the digital video signal never fluctuates. Further, there is no need to adjust the offset voltages and circuit gains of the related analog circuits. Accordingly, there can be utilized the adjustment-free video signal clamper of the high precision and simple configuration.

**Claims**

1. A video signal clamper including at least a DC level shifting circuit for controlling a level of DC component of an input analog video signal in response to a bias voltage supplied to the DC level shifting circuit, and an A-D converter for converting the input analog video signal which is controlled in DC level by and outputted from the DC level shifting circuit, into a digital video signal, said video signal clamper characterized by comprising:

   comparison (7, 22) means for producing, at every horizontal scanning period of the analog video signal, a digital difference value by comparing the digital video signal converted from a portion to be clamped of the analog video signal outputted from the DC level shifting circuit with a reference value;

   integrating means (9), receiving sequentially a series of the difference values produced by the comparison means, for summing the series of the digital difference values received up to present to output the resultant sum; and

   converter means (10) for converting said resultant sum into an analog signal, which is supplied to the DC level shifting circuit as said bias voltage.

2. The clamper according to claim 1, wherein the comparison means produces as said digital difference value, selectively a first constant value, a second constant value or zero in accordance with whether said digital video signal converted from said portion is smaller than, larger than or equal to said reference value, respectively.

3. The clamper according to claim 1, wherein the comparison means produces as said digital difference value, a value having a linear relationship with the result of the comparison.

4. The clamper according to claim 1, wherein the comparison means produces as said digital difference value, a value having a nonlinear relationship with the result of the comparison.

FIG.1 PRIOR ART

EP 0 462 804 A2

FIG.2 PRIOR ART

FIG.3

FIG.4

VI○→

2

VB

3a

3b

3 3c

BUFF 4

21

A/D CONV 5

→VO

EP 0 462 804 A2

9

9b 9d

9f

LATCH 9e

9g 9c 9a

9h ○ LP

DATA CONV 32b 32a

32

22 22a

22c

22b

○ REF

6d

LATCH 6 6a

○ GP

11a 10b

D/A CONV 10

11c 11b

10a

11

○ V-OFFSET

F I G . 5

FIG.6